# EUROPEAN PATENT APPLICATION

(11) **EP 1 806 602 A2**
(43) Date of publication of application: **11.07.2007**
(21) Application number: 06122875.5
(22) Date of filing: 24.10.2006
(51) Int. Cl.: G02B 5/00, G02B 5/20, H01J 9/227

(54) **Black matrix of color filter and method of manufacturing the black matrix**

(30) Priority: 06.01.2006 KR 20060001675
(71) Applicant: Samsung Electronics Co., Ltd., Suwon-si, Gyeonggi-Do (KR)
(72) Inventor: KIM, Wou-sik 316-105 Cheongmyeong Maeul, Suwon-si, Gyeonggi-do (KR); KIM, Seong-jin, Bundang-gu, Seongnam-si, Gyeonggi-do (KR); CHA, Tae-woon, Seoul (KR); SHIN, Seung-joo, Seoul (KR)
(74) Representative: Greene, Simon Kenneth

(57) **Abstract**

Provides are a black matrix for color filters and a method of manufacturing the black matrix. The black matrix is formed on a substrate and defines a plurality of pixel regions. The black matrix has an upper surface having a plurality of nano-sized grooves formed therein and being ink-phobic, and lateral surfaces being ink-philic.

## Description

### BACKGROUND OF THE INVENTION

The present invention relates to a black matrix of a color filter, and more particularly, a black matrix for color filters by which ink mixture between pixels of a color filter may be prevented and the color reproducibility and contrast ratio of the color filter may be improved, and a method of manufacturing the black matrix.

Up to now, cathode ray tube (CRT) monitors have been usually used to display information from TVs and computers. However, recently, flat panel displays, such as, liquid crystal displays (LCDs), plasma display panels (PDPs), electro-luminescence (EL) displays, light emitting diodes (LEDs), or field emission displays (FEDs), are being used with a recent increase in the sizes of screens. LCDs among these flat panel displays are widely used as desk-top computer monitors, lap-top computer monitors, etc. because of low power consumption.

General LCDs include a color filter that forms images of desired colors by transmitting white light modulated by a liquid crystal layer. To manufacture a color filter, first, a black matrix having a predetermined shape is formed on a transparent substrate, and then inks of predetermined colors, such as, red (R), green (G), and blue (B), are injected into pixel regions defined by the black matrix using an inkjet printing method, for example, to form pixels of the predetermined colors.

In the manufacture of the color filter, when an upper surface and a lateral surface of the black matrix are both ink-philic, ink injected into each pixel region may overflow onto the upper surface ink and thus color mixture between pixels may occur. On the other hand, when the upper surface and the lateral surface of the black matrix are both ink-phobic, the ink mixture between pixels can be prevented, but ink coated within each pixel region cannot have a uniform thickness due to the lack of wetting of the lateral surface of the black matrix with ink. Hence, light leakage around the lateral surfaces of the black matrix may occur, consequently degrading the color reproducibility and the contrast ratio of the color filter.

Therefore, to address the ink mixture and light leakage problems, it is desirable to render the upper surface of the black matrix ink-phobic and the lateral surface thereof ink-philic.

### SUMMARY OF THE INVENTION

The present invention provides a black matrix for color filters by which ink mixture between pixels of a color filter may be prevented and the color reproducibility and contrast ratio of the color filter may be improved, and a method of manufacturing the black matrix.

According to an aspect of the present invention, there is provided a black matrix for color filters that is formed on a substrate and defines a plurality of pixel regions, the black matrix including: an upper surface having a plurality of nano-sized grooves formed therein and being ink-phobic; and lateral surfaces being ink-philic.

The black matrix may be formed of an ink-philic material. The black matrix may be formed of polymer-based organic resin.

Each of the grooves may be 20-200nm in size and 1000-100000nm² in cross-sectional area. The grooves may occupy 20-50% of the upper surface. Each of the grooves may be 50-200nm in depth.

According to another aspect of the present invention, there is provided a color filter including: a substrate; a black matrix formed on a substrate and defining a plurality of pixel regions; and ink of predetermined colors filled within the pixel regions. The black matrix include: an upper surface having a plurality of nano-sized grooves formed therein and being ink-phobic; and lateral surfaces being ink-philic.

According to another aspect of the present invention, there is provided a method of manufacturing a black matrix for color filters, the method comprising the operations of: forming a light shade layer of an ink-philic material on a substrate; patterning the light shade layer to define a plurality of pixel regions on the substrate; and forming a black matrix by forming nano-sized grooves on an upper surface of the patterned light shade layer using a nano-imprinting process.

The operation of forming the light shade layer may include: coating the ink-philic material on the substrate; and soft baking the ink-philic material. After the patterning of the light shade layer, the operation of hard baking the patterned light shade layer may be further included. In this case, the nano-imprinting process may be executed during the hard baking of the patterned light shade layer.

The operation of forming the grooves using the nano-imprinting process may include: installing a stamp over the patterned light shade layer, the stamp having nano-sized protrusions formed on its bottom; pressing the stamp down on the upper surface of the patterned light shade layer so as to form grooves having shapes depending on the shapes of the protrusions in the upper surface of the patterned light shade layer; and separating the stamp from the light shade layer.

The stamp may be formed of a material selected from the group consisting of glass, quartz, silicon (Si), and poly(dimethylsiloxane) (PDMS).

According to yet another aspect of the invention, there is provided a black matrix for color filters that is formed on a substrate and defines a plurality of pixel regions on the substrate for receiving a predetermined ink, the black matrix comprising: an upper surface being formed such that it repels the predetermined ink; and lateral surfaces that are formed such that they do not repel the predetermined ink.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of a black matrix of a color filter according to an embodiment of the present invention;
FIG. 2 is a cross-section of the black matrix shown in FIG. 1;
FIG. 3 is a color filter manufactured using the black matrix shown in FIGS. 1 and 2; and
FIGS. 4A through 4D are cross-sectional views illustrating a method of manufacturing the black matrix shown in FIGS. 1 and 2.

### DETAILED DESCRIPTION OF THE INVENTION

The present invention will now be described more fully with reference to the accompanying drawings, in which exemplary embodiments of the invention are shown. In the drawings, the thicknesses of elements are exaggerated for clarity. Like reference numerals in the drawings denote like elements, and thus their description will be omitted.

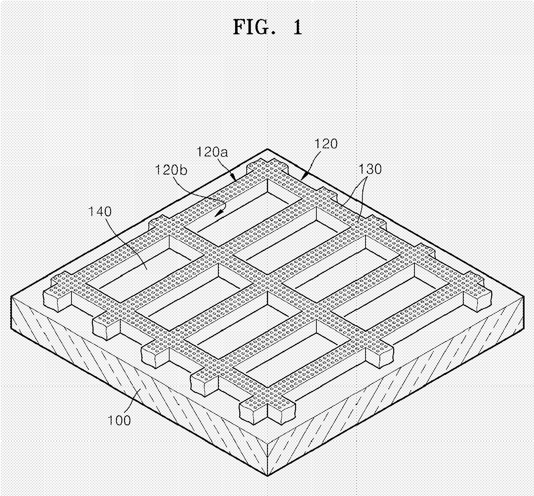

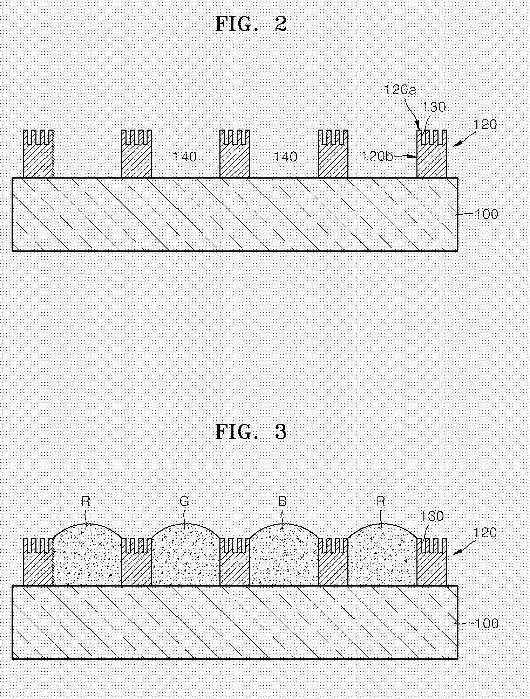

FIG. 1 is a perspective view of a black matrix 120 of a color filter according to an embodiment of the present invention. FIG. 2 is a cross-section of the black matrix shown in FIG. 1.

Referring to FIGS. 1 and 2, the black matrix 120 having a predetermined shape is formed on a substrate 100. A plurality of pixel regions 140 are defined on the substrate 100 by the black matrix 120. Each of the pixel regions 140 is filled with ink of a predetermined color, and thus pixels are formed. Consequently, a color filter made up of the pixels is formed.

The substrate 100 is transparent, and a glass substrate or a plastic substrate may be used as the transparent substrate 100. The black matrix 120 is formed of an ink-philic material. The black matrix 120 may be formed of polymer-based organic resin. The black matrix 120 may have a height of about 1.5µ m and a width of about 30µ m.

An upper surface 120a of the black matrix 120 may have a concavo-convex structure. More specifically, nano-sized grooves 130 are formed on the upper surface 120a of the black matrix 120. Although the grooves 130 having circular horizontal cross-sections are illustrated in FIG. 1, the cross-sections of the grooves 130 are not limited to circles but may have the other various cross-section shapes. In the present embodiment, the grooves 130 may occupy 10-60% of the upper surface 120a of the black matrix 120. Each of the grooves 130 may be about, 10-500nm, preferably about 20-200nm, in size and about 1000-100000nm², preferably, about 5000-10000nm², in cross-sectional area. The size of each of the grooves 130 denotes the diameter of each groove 130 or a maximum distance between inner walls of each groove 130. The depth of each of the grooves 130 may be about 20-500nm, preferably 50-200nm.

As described above, when the nano-sized grooves 130 are formed on the upper surface 120a of the black matrix 120, the upper surface 120a is rendered ink-phobic. The reason why the upper surface 120a of the black matrix 120 formed of an ink-philic material has an ink-phobic characteristics is due to a lotus effect. More specifically, when the nano-sized grooves 130 are formed on the upper surface 120a of the black matrix 120, the upper surface 120a is made up of a surface of the material of the black matrix 120 and the air filled within the grooves 130. Accordingly, when the nano-sized grooves 130 are formed on the upper surface 120a of the black matrix 120, an area of the upper surface 120a that contacts ink is reduced compared with when the upper surface 120a of the black matrix 120 has no concave-convex structures, that is, is flat. Hence, the surface energy on the upper surface 120a in which the grooves 130 are formed is reduced, and the contact angle with respect to ink is increased. Consequently, the upper surface 120a having the grooves 130 is rendered ink-phobic. For example, given that the contact angle of a flat plane formed of a certain material with respect to ink is approximately 10, when nano-sized grooves are formed on the flat plane so that air occupies 30% of the flat plane, the contact angle of the plane having the grooves with respect to ink is increased to about 67° .

As described above, the upper surface 120a of the black matrix 120 is processed to have a concavo-convex structure using a physical method instead of changing the component of the black matrix 120 or chemically processing the surface of the black matrix 120, so that the upper surface 120a of the black matrix 120 is rendered ink-phobic.

Lateral surfaces 120b of the black matrix 120 formed of an ink-philic material are kept ink-philic.

In other words, the upper surface 120a having the grooves 130 has a tendency to repel, not combine with, or not attract ink. Conversely, lateral surfaces 120b are formed such that they have a tendency to attract, combine with, or not repel ink.

The ink may be a water-based ink and may be suitable for being injected or inkjet printed.

FIG. 3 is a color filter manufactured using the black matrix 120. Referring to FIG. 3, the color filter includes the substrate 100, the black matrix 120 formed on the substrate 10 and defining pixel regions, and ink of predetermined colors, such as, red (R), green (G), and blue (B), filled in the regions.

As described above, since the upper surface 120a of the black matrix 120 has the nano-sized grooves 130 formed therein, the upper surface 120a is ink-phobic. Accordingly, when pixels are formed by injecting ink into the pixel regions using an inkjet printing method, for example, color mixture between pixels can be prevented. In addition, since the lateral surfaces 120b of the black matrix 120 are ink-philic, ink can be coated within the pixel regions to have uniform thicknesses. Hence, the color reproducibility and the contrast ratio of the color filter can be improved.

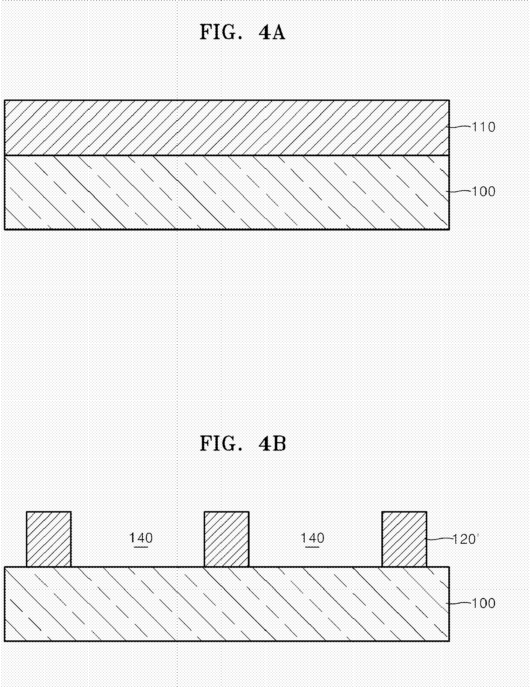

FIGS. 4A through 4D are cross-sectional views illustrating a method of manufacturing the black matrix 120. Referring to FIG. 4A, a light shade layer 110 formed of an ink-philic material is formed on the substrate 100. The light shade layer 110 may be formed by coating the ink-philic material to a predetermined thickness on the substrate 100 and soft baking the same. The substrate 100 is transparent and may be a glass substrate or a plastic substrate. The ink-philic material may be polymer-based organic resin. The ink-philic material may be coated on the substrate 100 using a method, such as, spin coating, die coating, or dip coating. The soft baking may be executed at about 80-120 °C for about 30 seconds to 2 minutes.

Referring to FIG. 4B, the light shade layer 110 is patterned into a patterned light shade layer 120'. The patterned light shade layer 120' defines a plurality of pixel regions 140 on the substrate 100. When the light shade layer 110 is formed of a photosensitive material, the patterning of the light shade layer 110 may be achieved by exposing the light shade layer 110 to light using a photomask (not shown) having a predetermined pattern. On the other hand, when the light shade layer 110 is formed of a non-photosensitive material, photoresist (not shown) is coated on the surface of the light shade layer 110 and patterned by lithography. The light shade layer 110 is etched using the patterned photoresist as an etch mask. The patterned light shade layer 120' may be about 1.5 µ m in height and about 30 µ m in width.

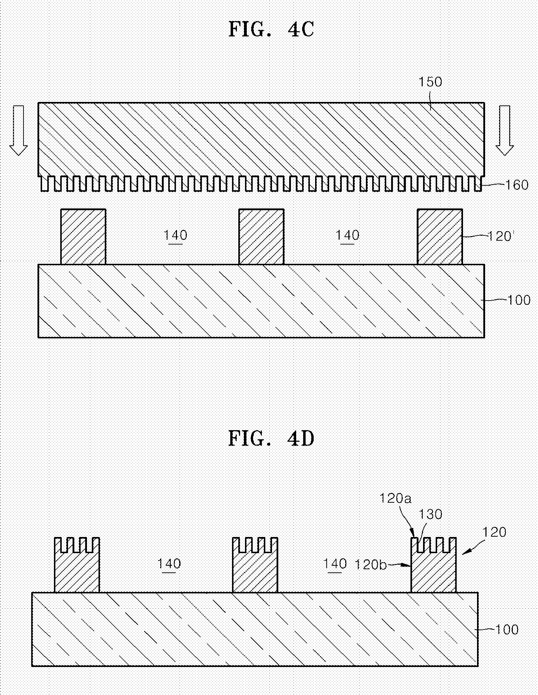

Thereafter, the patterned light shade layer 120' is hard baked. The hard baking may be performed at about 200-230 ° C for about 20 - 40 minutes. While the patterned light shade layer 120' is being hard baked, the nano-sized grooves (see FIG. 4D) may be formed on the upper surface of the patterned light shade layer 120' using a nano-imprinting process.

More specifically, referring to FIG. 4C, first, a stamp 150 is installed over the patterned light shade layer 120'. The stamp 150 has nano-sized protrusions 160 formed on its bottom. The stamp 150 may be formed of a material selected from the group consisting of glass, quartz, silicon (Si), and poly(dimethylsiloxane) (PDMS). Next, when the stamp 150 is pressed down on the upper surface of the patterned light shade layer 120' , the protrusions 160 formed on the bottom surface of the stamp 150 enter into the upper surface of the patterned light shade layer 120' , so that the grooves 130 (see FIG. 4D) having shapes depending on the shapes of the protrusions 160 are formed in the upper surface of the patterned light shade layer 120' . At this time, since the patterned light shade layer 120' is rendered soft during the hard baking, the protrusions 160 of the stamp 150 can easily squeeze into the upper surface of the patterned light shade layer 120'.

Then, when the stamp 150 is taken away, the black matrix 120 is completely formed. The grooves 130 formed on the upper surface 120a of the black matrix 120 using the nano-imprinting process may be about 20-200nm in size and about 1000-100000nm², preferably, about 5000-10000nm², in cross-sectional area. The grooves 130 may occupy 20-50% of the upper surface 120a of the black matrix 120. The depth of each of the grooves 130 may be about 50-200nm. As described above, when the nano-sized grooves 130 are formed on the upper surface 120a of the black matrix 120, the upper surface 120a is rendered ink-phobic, and the lateral surfaces 120b of the black matrix 120 are rendered ink-philic.

Although a black matrix for a color filter usually used in LCDs and a method of fabricating the black matrix have been illustrated, the structure of the black matrix and the fabrication thereof may be equally applied to banks that are used in organic ELs (OLEDs).

As described above, the upper surface of a black matrix according to the present invention may be rendered ink-phobic by making the upper surface of the black matrix have a concavo-convex structure using a physical method. Thus, when a color filter is manufactured using the black matrix, ink mixture between pixels of the color filter can be prevented. Furthermore, since the lateral surfaces of the black matrix are kept ink-philic, the color reproducibility and contrast ratio of the color filter can be improved.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A black matrix (120) for color filters that is formed on a substrate (100) and defines a plurality of pixel regions (140) on the substrate for receiving a predetermined ink, the black matrix (120) comprising:
an upper surface (120a) having a plurality of nano-sized grooves (130) formed therein and being ink-phobic; and
lateral surfaces arranged to define the plurality of pixel regions (140) and to be ink-philic.

2. The black matrix for color filters of claim 1, wherein the upper surface (120a) is ink-phobic due to a locus effect which is caused by the nano-sized grooves (130).

3. The black matrix for color filters of claim 1 or 2, wherein the black matrix (120) is formed of an ink-philic material.

4. The black matrix for color filters of claim 3, wherein the black matrix (120) is formed of polymer-based organic resin.

5. The black matrix for color filters of claim 1, 2, 3 or 4, wherein each of the grooves (130) is 20-200nm in size.

6. The black matrix for color filters of any preceding claim, wherein each of the grooves (130) is 1000-100000nm² in cross-sectional area.

7. The black matrix for color filters of any preceding claim, wherein the grooves (130) occupy 20-50% of the upper surface.

8. The black matrix for color filters of any preceding claim, wherein each of the grooves is 50-200nm in depth.

9. The black matrix for color filters of any preceding claim, wherein the ink is suitable for inject printing.

10. A color filter comprising:
a black matrix according to any preceding claim; and
ink of predetermined colors filled within the pixel regions (140).

11. A method of manufacturing a black matrix for color filters, the method comprising:
forming a light shade layer (110) of an ink-philic material on a substrate (100);
patterning the light shade layer (110) to define a plurality of pixel regions (140) on the substrate (100); and
forming a black matrix (120) by forming nano-sized grooves (130) on an upper surface of the patterned light shade layer (120) using a nano-imprinting process.

12. The method of claim 11, wherein the light shade layer (110) is formed of polymer-based organic resin.

13. The method of claim 11, wherein the forming of the light shade layer (110) comprises:
coating the ink-philic material on the substrate (100); and
soft baking the ink-philic material.

14. The method of claim 13, wherein the soft baking is performed at 80-120°C.

15. The method of any of claims 11 to 14, after the patterning of the light shade layer (110), further comprising hard baking the patterned light shade layer (120).

16. The method of claim 15, wherein the hard baking is performed at approximately 200-230°C.

17. The method of claim 15 or 16, wherein the nano-imprinting process is executed during the hard baking of the patterned light shade layer (120).

18. The method of any of claims 11 to 17, wherein the forming of the grooves (130) using the nano-imprinting process comprises:
installing a stamp (150) over the patterned light shade layer (120), the stamp (130) having nano-sized protrusions (160) formed on its bottom;
pressing the stamp down (150) on the upper surface of the patterned light shade layer (120) so as to form grooves (130) having shapes depending on the shapes of the protrusions (160) in the upper surface of the patterned light shade layer (120); and
separating the stamp (150) from the light shade layer (120).

19. The method of claim 18, wherein the stamp (150) is formed of a material selected from the group consisting of glass, quartz, silicon, and polydimethylsiloxane.

20. The method of any of claims 11 to 19, wherein each of the grooves (130) is formed to have a size of 20-200nm.

21. The method of any of claims 11 to 20, wherein each of the grooves (130) is formed to have a cross-sectional area of 1000-100000nm².

22. The method of any of claims 11 to 21, wherein the grooves (130) occupy 20-50% of the upper surface of the black matrix.

23. The method of any of claims 11 to 22, wherein each of the grooves (130) is formed to have a depth of 50-200nm.
